# FASCICULE DE BREVET EUROPEEN

(11) **EP 0 448 894 B1**
(45) Date de publication et mention de la délivrance du brevet: **16.02.1994**
(21) Numéro de dépôt: 90403516.9
(22) Date de dépôt: 11.12.1990
(51) Int. Cl.: G01M 3/26

(54) **Procédé et dispositif de contrôle de l'adhésion d'un nida sur un support**
Verfahren und Einrichtung zur Kontrolle der Verbindung einer bienennestartigen Struktur auf einem Träger
Procedure and apparatus for controlling the fitness of a nidus structure on a carrier

(30) Priorité: 11.12.1989 FR 8916350
(43) Date de publication de la demande: 02.10.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Krempel, Claude Jean, F-77000 Vaux Le Penil (FR); Mache, Jean-Louis Georges, F-77240 Vert Saint Denis (FR)
(74) Mandataire: Moinat, François

(56) Documents cités:
- CH-A- 215 694
- GB-A- 1 197 631

## Description

La présente invention a pour objet un procédé de contrôle de l'adhésion d'une structure alvéolaire telle que celles appelées nids d'abeille, ou nida, sur un support, ainsi que des dispositifs de mise en oeuvre dudit procédé.

Dans la suite du texte on évoquera donc par nida toute sorte de structures alvéolaires quelle que soit la géométrie de l'alvéole. De même, on parlera seulement de collage du nida sur son support sans que cela implique une limitation car le procédé est applicable au contrôle de tout mode d'adhésion du nida sur le support, qu'il s'agisse de collage, de soudage, de brasage ou d'autres modes de liaison.

L'industrie aéronautique utilise de plus en plus les structures nida, pour leur légèreté et leur résistance à l'écrasement, comme renfort de structure, par exemple pour des carters de turbomachines, ou pour la réalisation de planchers d'avion.

On peut citer ainsi les carters de soufflante des turboréacteurs,à l'extérieur desquels on peut disposer une bande annulaire de nida au droit des aubes fan en remplacement des nervures de renfort antérieures dont l'usinage nécessitait une surépaisseur importante de la pièce brute par rapport à la pièce finie.

Le nida ainsi disposé est une structure particulièrement efficace en renfort à la condition qu'il soit collé (ou brasé selon le mode d'assemblage choisi) sur le fond de la totalité une ses alvéoles. Pour en obtenir l'assurance, on est amené à effectuer un contrôle statistique très serré de ce collage.

Actuellement, on procède à cet examen par contrôle endoscopique des fonds des alvéoles en éclairant violemment un alvéole et en examinant le fond de l'alvéole voisin pour voir si un défaut de collage laisse passer entre l'alvéole éclairé et l'alvéole voisin un rai de lumière. Cette technique de contrôle est bien connue de l'homme de métier.

Cet examen est réalisé de façon statistique en contrôlant la bande de nida sur trois ou quatre points de sa largeur et tous les cinq centimètres sur sa longueur. Ainsi le contrôle d'une bande de nida de 15 cm de largeur placé en renfort sur un carter fan ayant un diamètre de 183 cm nécessite une durée de contrôle qui peut dépasser huit heures avec une fatigue visuelle importante pour l'opérateur et donc une fiabilité du contrôle diminuant avec le temps.

L'examen peut également être pratiqué par capillarité au moyen d'un liquide fluorescent, ce qui nécessite d'utiliser des liquides très mouillants, et de ce fait comprenant souvent des constituants dangereux pour l'opérateur. Par ailleurs, le contrôle d'un carter nécessite de plonger celui-ci dans une cuve pour le mouiller ce qui nécessite des installations volumineuses. L'opération de contrôle elle-même est aussi longue que celle de contrôle endoscopique.

La présente invention a pour but de prévoir un procédé de contrôle par mesure de débit d'air qui puisse présenter une alternative plus aisée au contrôle endoscopique. Le principe de l'invention consiste donc à appliquer sur une première zone du nida à contrôler une enceinte alimentée en air sous pression et à constater si cet air peut sortir de la zone contrôlée par des défauts de collage. La mesure du débit de fuite permettra ainsi aisément de constater l'absence ou la présence de défauts de collage.

L'invention a également pour but de présenter un procédé et un dispositif de contrôle aptes à être automatisés afin de permettre un contrôle en ligne en atelier, des pièces revêtues d'un nida. Un des buts est donc également de proposer un tel dispositif automatisé de contrôle des nida sur des pièces circulaires.

L'invention a donc pour objet un procédé de contrôle du collage ou du brasage d'une structure nid d'abeille (dite nida) sur un support, caractérisé en ce qu'on applique sur la surface externe des alvéoles du nida un boîtier capteur comportant deux compartiments séparés par une cloison centrale, un premier compartiment étant alimenté en air comprimé et l'autre comportant une tubulure d'échappement reliée à un débit-mètre, on mesure le débit d'air passé du premier au second compartiment et évacué par la tubulure d'échappement, et on en déduit la présence ou non de zones non adhérentes du nida sur le support.

Dans une application du procédé au contrôle du collage ou du brasage sur une surface de zone égale à celle du boîtier capteur, on utilisera avantageusement un boîtier capteur comportant deux compartiments séparés par une cloison étanche obligeant l'air à passer au travers de zones non collées du nida sur le support pour passer du premier au second compartiment. Dans ce cas, la présence de défauts de collages du nida sur le support sera révélée par l'existence d'un débit dans la tubulure d'échappement tandis que l'application du boîtier sur une zone du nida normalement collée sera traduite par un débit nul dans la tubulure d'échappement.

Ce mode d'application autorise l'utilisation d'un boîtier capteur de taille importante par exemple 15 cm x 10 cm qui permet de se faire une idée rapide de l'emplacement approximatif des défauts, dans le plan de la cloison tout en laissant une incertitude sur la localisation à l'intérieur de ce plan.

Aussi, pour affiner la recherche de localisation des défauts ou pour contrôler dans les endroits difficilement accessibles, on pourra compléter l'opération par une autre variante du procédé plus particulièrement adaptée au contrôle localisé de petites surfaces.

Dans cette variante adaptée au contrôle de défauts de collages d'un nida sur une structure, défauts existants entre les alvéoles situées au droit des parois du boîtier capteur appliqué sur le nida et la zone qui l'entoure, on appliquera sur la zone à contrôler un boîtier capteur dont la cloison interne n'assure pas l'étanchéité entre le premier et le second compartiment et on déduira l'existence d'un défaut au droit de la paroi externe du boîtier capteur, de la constatation d'un débit nul ou inférieur au débit de la source d'air comprimé, dans la tubulure d'échappement du boîtier capteur.

L'invention a également pour objet les dispositifs de contrôle permettant l'usage indiqué plus haut.

Selon l'invention, de tels dispositifs peuvent comporter un boîtier capteur défini par un volume, tel qu'un parallélépipède rectangle ou un cylindre ou toute forme adaptée au besoin, comportant une face plane ouverte et possédant une cloison intermédiaire définissant deux compartiments débouchant chacun sur la face ouverte, ladite face ouverte étant apte à être plaquée contre la surface externe d'un nida dont l'extrémité interne est collée sur un support. Le dispositif de contrôle comportera en combinaison avec ledit boîtier une source d'air comprimé reliée par une tubulure à la paroi du premier compartiment pour alimenter celui-ci en air comprimé et au moins un débit-mètre relié par une tubulure d'échappement à la paroi du second compartiment du boîtier et apte à mesurer le débit d'air passant par ladite tubulure d'échappement lorsque le boîtier capteur est plaqué contre le nida dont le collagesur le support doit être contrôlé.

L'invention a également pour objet divers modes de réalisation automatisés ou non du dispositif décrit ci-dessus et plus précisément adapté au contrôle du collage ou du brasage de bandes de nida sur des pièces circulaires, telles que par exemple des carters de turbomachine.

Ces modes de réalisation seront décrits plus loin dans le complément de description qui va suivre accompagné de planches de dessins montrant de façon limitative les divers modes de réalisation de l'invention :
- la figure 1 montre en coupe le principe d'un boîtier adapté au contrôle de grandes surfaces ;
- la figure 2 montre le principe de contrôle au moyen d'un second boîtier de plus petite dimension adapté à des contrôles ponctuels ;
- les figures 3 et 4 illustrent le fonctionnement du dispositif de la figure 2 dans les cas respectifs où la zone contrôlée est saine (figure 3) puis où on constate un défaut de collage (figure 4) ;
- la figure 5 montre un mode de réalisation d'un dispositif automatisé adapté au contrôle du collage de bandes circulaires de nida sur un carter cylindrique.
- la figure 6 illustre le calcul de l'épaisseur de la cloison étanche du boîtier capteur ;
- la figure 7 montre une variante du boîtier de la figure 1 adaptée à un contrôle localisé vue de dessous ;
- les figures 8 et 9 montrent des coupes partielles de face et de profil d'un autre mode de réalisation d'un boîtier capteur à cloison interne étanche apte à être déplacé par roulage sur le nida à contrôler, la figure 8 étant coupée suivant le plan AA de la figure 9.

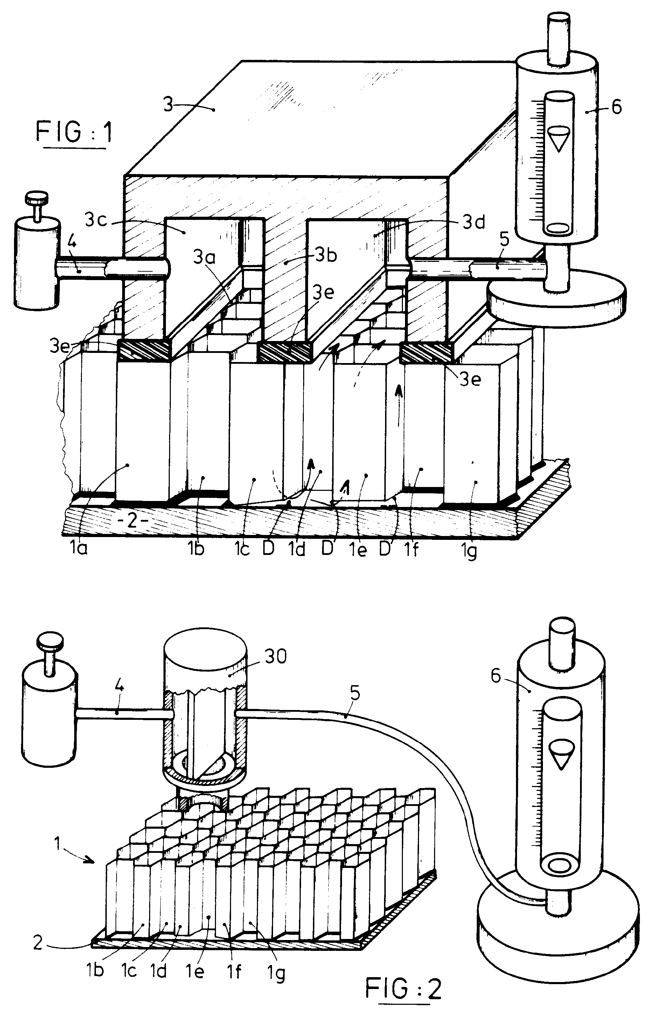

A la figure 1 on a représenté une structure nid d'abeille ou nida dont les alvéoles 1a à 1g sont collés sur une pièce 2. On voit que, entre les parois des alvéoles 1a et 1b, 1b et 1c, 1f et 1g, le collage est correctement effectué et que des congés de colle (ou de brasure) relient la pièce et les parois des alvéoles, fermant ainsi le fond des alvéoles de façon étanche.

Par contre, on a représenté entre les parois des alvéoles 1c et 1d, 1d et 1e, 1e et 1f des défauts de collage D. Dans ces endroits la paroi de l'alvéole n'est pas reliée par un cordon de colle à la pièce.

Le boîtier capteur 3, selon l'invention est constitué d'un parallélépipède rectangle ouvert sur sa face inférieure 3a et comportant une cloison interne 3b séparant le boîtier en deux cavités 3c et 3d. La paroi inférieure ouverte du boîtier comporte au droit de ses bords et de la cloison intérieure 3b un joint caoutchouc d'étanchéité 3e qui permet de plaquer le boîtier sur une zone à contrôler de telle sorte que l'air ne puisse passer d'une des cavités 3c et 3d à l'autre, ni de l'intérieur vers l'extérieur du boîtier.

La première cavité, 3c, est reliée par une tubulure 4 à une source d'air comprimé, ici un détendeur à pression de 0,4 bar en sortie d'une installation industrielle d'air comprimé.

La seconde cavité 3d est reliée par une tubulure d'échappement 5 à un débit-mètre 6 au travers duquel l'air pourra s'échapper.

Le fonctionnement d'un tel boîtier capteur est simple. Si le boîtier est appliqué sur toute sa surface sur une zone saine, l'air comprimé entrant dans la cavité 3c pénètre par l'ouverture 3a dans les alvéoles du nida.

Le collage des alvéoles étant bon, l'air ne peut s'échapper par le fond de ceux-ci et aucun débit d'air ne peut passer dans la seconde cavité 3d du boîtier. Le débit-mètre 6 auquel cette cavité 3d est reliée indiquera donc un débit nul.

Si comme indiqué à la figure 1, le boîtier est plaqué sur une zone comportant des défauts D de collage, l'air comprimé pénétrant dans l'alvéole 1c par la cavité 3c du boîtier pourra s'échapper vers la cavité 3d du boîtier par les défauts D existant entre les cavités 1c et 1d, 1d et 1e, 1e et 1f.

L'air, ainsi passé dans la cavité 3d, s'échappera dans la tubulure 5 vers le débit-mètre 6 qui indiquera alors un débit.

Si le débit mesuré est égal au débit d'entrée, on pourra en conclure que la fuite donc le défaut de collage est localisée sous la seule surface du second compartiment du boîtier. A l'inverse si le débit d'échappement est compris entre O et le débit d'entrée, on pourra en déduire que la fuite est plus étendue et que le défaut de collage s'étend sur une zone supérieure à la surface du boîtier.

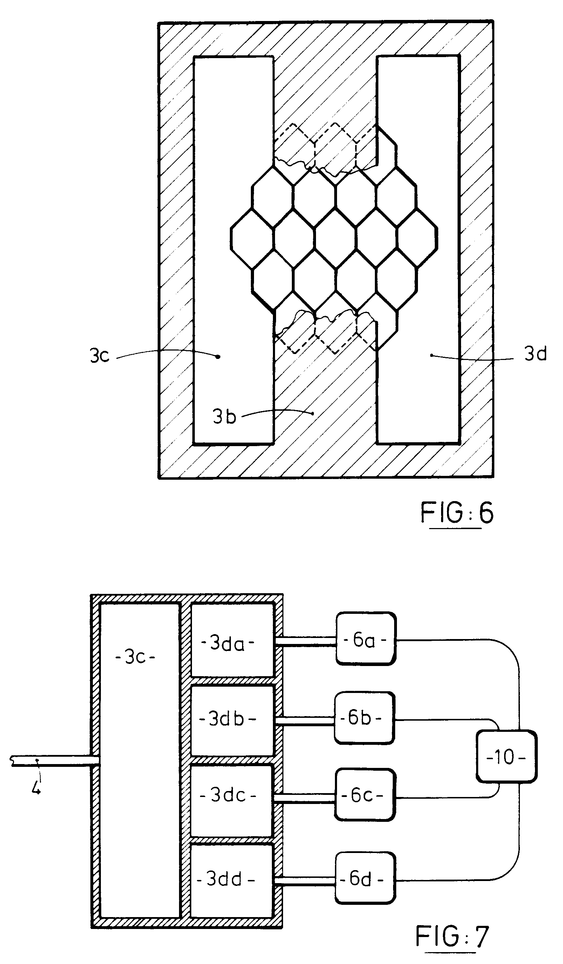

Un tel boîtier est particulièrement utilisable pour des surfaces importantes. Il est limité en dimension par le fait que chaque cavité 3c, 3d doit avoir une largeur minimale égale ou moins à celle d'un alvéole et demi. La dimension maximale n'est limitée que par le degré de précision que l'on désire obtenir sur la localisation du défaut de collage. Le dimensionnement de la cloison 3b est également important. Au regard de la figure 6, on pourra constater que la dimension de la cloison devra être déterminée en fonction de la dimension du défaut de collage maximal admissible, la cloison devant avoir une épaisseur inférieure de 1/2 largeur d'alvéole de celle du défaut maximal admissible. Ainsi par exemple si le défaut maximal admissible est égal à la largeur de 3 alvéoles, la cloison devra avoir une épaisseur égale à 2 alvéoles et demi. Dans la plupart des cas on pourra estimer suffisant une épaisseur égale à un alvéole et demi.

Un tel boîtier est donc particulièrement adapté à une mesure rapide de localisation de défauts.

Cette mesure pourra ensuite être affinée si nécessaire au moyen du dispositif des figures 2 à 4.

Les parties identiques à la figure 1 sont représentées par les mêmes repères chiffrés. Ici, seul le boîtier capteur 30 est différent.

De dimension plus réduite que le précédent il est de forme cylindrique dont le fond est ouvert pour être plaqué sur le nida 1 à contrôler.

Dans ce mode de réalisation une cloison 30b sépare le boîtier en deux cavités 30c et 30d. Toutefois, le joint d'étanchéité placé sur la face ouverte n'existe qu'au droit des bords externes du boîtier tandis que la cloison centrale n'en est pas munie. L'objet de cette cloison est d'éviter un cheminement direct de l'air comprimé de la tubulure 4 vers la tubulure 5, ce qui réduirait la sensibilité de la mesure.

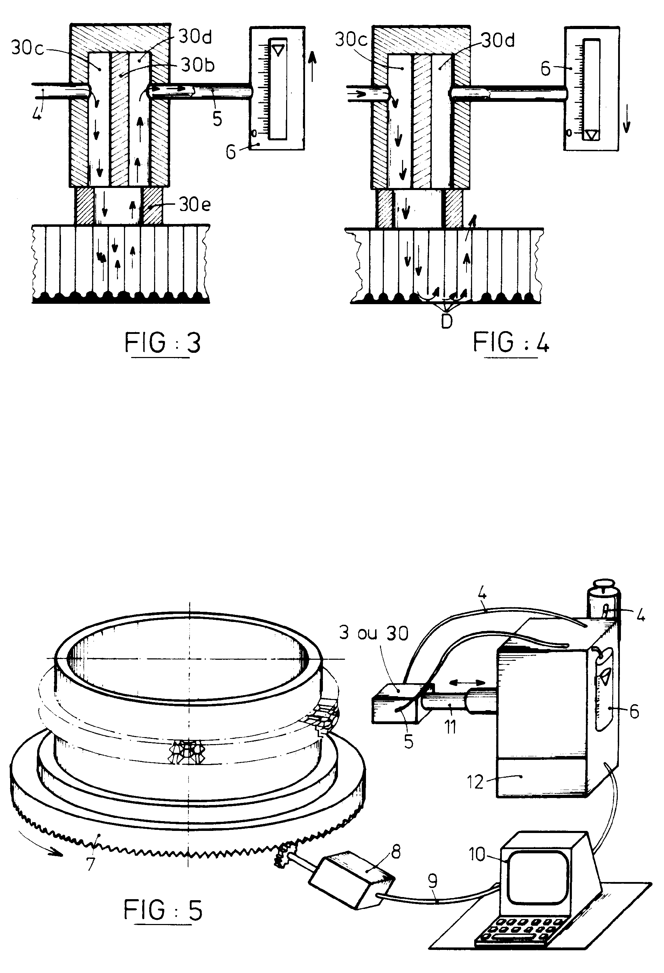

Ainsi, si comme à la figure 3, le boîtier est plaqué sur une zone où le collage est sain, l'air pénétrant par la cavité 30c dans les alvéoles du nid ressortira nécessairement du nida par la cavité 30d du boîtier et s'échappera par le débit-mètre 6. C'est donc l'indication d'un débit d'échappement égal au débit d'entrée qui, ici, sera représentative d'une zone contrôlée saine.

A l'inverse et comme montré à la figure 4, si le boîtier 30 est plaqué contre une zone présentant des défauts de collage, l'air pénétrant depuis la cavité 30c dans les alvéoles 1 s'échappera vers l'extérieur du boîtier par les défauts D et les alvéoles avoisinants.

Ainsi c'est l'indication d'un débit nul ou voisin de zéro qui indiquera le passage du boîtier devant une zone présentant un défaut.

Un tel boîtier peut être réalisé avec des dimensions très faibles et il est donc particulièrement adapté à une localisation précise des défauts de collage et au contrôle de zones difficilement accessibles.

Un autre moyen d'affiner le contrôle en précisant la localisation du départ sur la largeur du boîtier (par rapport au sens de déplacement de celui-ci et non de sa géométrie propre) est montré à la figure 7. Dans cette variante, le compartiment d'échappement 3d est séparé en quatre compartiments (3da, 3db, 3dc, 3dd), le compartiment d'admission étant inchangé (mais ce nombre pourra être modifié pour tenir compte de la taille du défaut admissible).

Ces quatre compartiments d'échappement sont reliés chacun à un débit-mètre 6a,...6d, eux-mêmes reliés à une unité d'enregistrement 10 commune permettant de mémoriser le compartiment d'échappement sur lequel une fuite a été détectée.

La figure 5 montre un mode de réalisation automatisé de l'invention appliqué ici au contrôle d'une bande de nida appliquée à l'extérieur d'un carter de soufflante de turboréacteur.

La pièce à contrôler est placée sur un plateau tournant 7 muni d'un dispositif de mise en rotation 8 permettant une rotation séquentielle du plateau. Le dispositif 8 comporte une sortie 9 vers une unité d'enregistrement, par exemple un micro-ordinateur 10 qui permettra d'enregistrer le codage angulaire de position de la pièce.

Un boîtier capteur 3 pour le cas de mesure rapide (ou 30 pour le cas de contrôle fin et localisé) est porté par un bras support 11 disposé radialement par rapport à la pièce et apte à se déplacer selon un mouvement linéaire alternatif pour plaquer le boîtier 3 ou 30 contre le nida à contrôler, lors de chaque séquence de rotation de la pièce.

La cavité 3c (ou 30c) du boîtier est reliée comme précédemment à une source d'air comprimé par une tubulure 4. Dans une variante, la source peut être commandée par une unité de commande par exemple le micro-ordinateur 10, pour ouvrir le débit d'air lorsque le boîtier capteur est plaqué par le bras contre le nida et pour interrompre le débit lorsque le bras support entame son mouvement de recul. Dans une autre variante il sera possible de laisser le débit ouvert pendant tout le cycle de contrôle, les débits et pressions mis en jeu étant faibles.

Le débit-mètre 6 peut être placé dans l'armoire 12 de support du bras 11 et il pourra comporter un coupleur permettant à l'unité de traitement 10 d'une part de mémoriser les débits mesurés et d'autre part de les corréler avec l'indication du codage angulaire du plateau tournant.

En effectuant une seule rotation complète de la pièce par approches successives du boîtier capteur 3 contre la pièce, si le capteur est aussi large que la bande de nida à mesurer, on pourra aisément détecter les positions angulaires où un défaut existe sur la largeur de la bande. Pour déterminer à quel endroit de la largeur de la bande est le défaut, on passera ensuite la zone précédemment détectée au contrôle avec le boîtier 30, ce qui pourra être fait soit manuellement, soit au moyen de l'automate décrit plus haut.

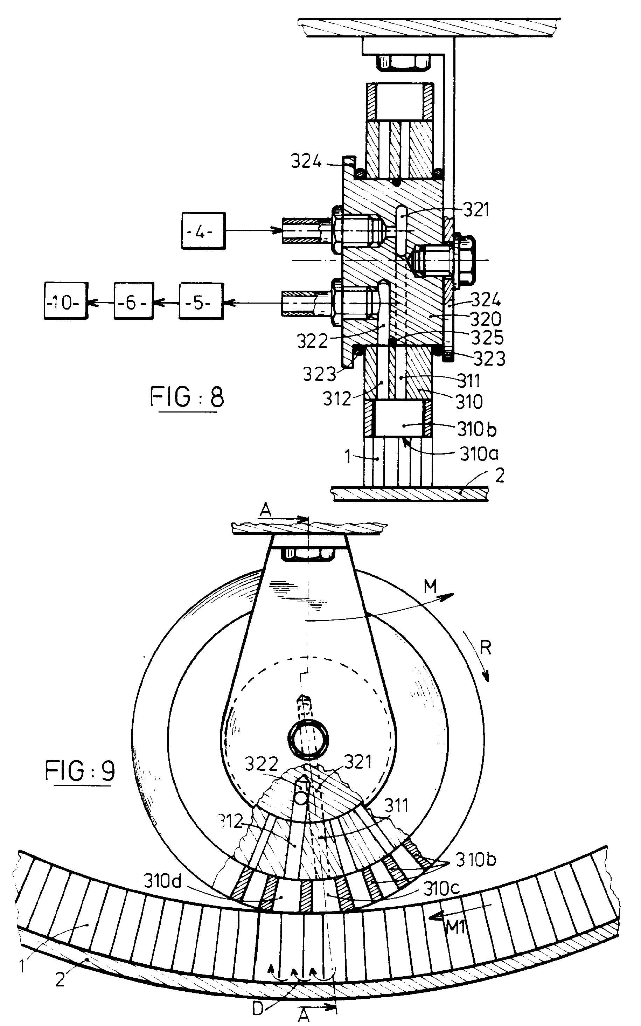

Les figures 8 et 9 illustrent un mode de réalisation de capteur apte à être déplacé par roulage (flèche R de la figure 9) sur la pièce à contrôler soit en déplacant le capteur (flèche M) par rapport à une pièce fixe, soit en déplaçant la pièce (flèche M1) tandis que le support de capteur est fixe, ce qui peut être adapté au contrôle de nida collés intérieurement à une pièce cylindrique.

Dans ce mode de réalisation, le boîtier capteur 300 comporte un distributeur 310 tournant autour d'un moyeu fixe 320. Le moyeu comporte un premier conduit radial 321 d'admission d'air comprimé relié à une source d'air comprimé 4 et un second conduit radial 322 d'échappement d'air relié par une tubulure 5 et un débit-mètre 6 et à une unité de contrôle 10.

Le distributeur comporte sur sa périphérie un joint circulaire collé définissant des compartiments séparés entre eux par des joints étanches 310b et en combinaison au moins un canal radial 311 d'admission d'air et un canal radial 312 d'échappement reliés chacun à un compartiment respectivement 310c, 310d, lesdits compartiments étant adjacents et séparés par un joint 310b.

Des joints d'étanchéité 323 placés entre le distributeur et les flasques latéraux 324 du moyeu empêchent toute fuite lors du roulage du distributeur sur le moyeu. De même, un joint torique 325 est disposé entre le moyeu et le distributeur pour isoler les canaux d'admission 311, 321 des canaux d'échappement 312, 322.

Lors de la rotation du distributeur 310 sur le moyeu 320 chaque compartiment devient sucessivement compartiment d'admission 310c puis compartiment d'échappement 310d, lors du passage de son conduit radial associé 311 ou 312 dans le prolongement de l'un des deux canaux d'admission 321 ou d'échappement 322 du moyeu.

Pendant le fonctionnement au moins deux compartiments successifs de distributeur sont plaqués sur le nida. L'air provenant de la source 4 pénètre dans le conduit 321 et traverse le conduit 311 du distributeur pour entrer dans le compartiment situé en avant (par rapport au mouvement relatif pièce/capteur). Celui-ci devient donc compartiment d'admission 310c. L'air qui traverse un défaut de collage D du nida pénètre dans le compartiment arrière qui devient compartiment d'échappement 310d. L'air s'échappe par le conduit 312 associé à ce compartiment et trouve alors le conduit 322 du moyeu pour s'échapper vers le débit-mètre 6. Le reste du principe est identique à celui du fonctionnement du boîtier 3.

A chaque pas de la rotation du distributeur, chaque cavité est successivement inemployée, puis devient compartiment d'admission, puis d'échappement lorsque la suivante vient au contact du nida, puis n'est plus en contact du nida et se trouve dès lors inemployée.

L'installation décrite ici permet de diviser par 20 le temps de contrôle d'un carter tout en conservant une fiabilité de contrôle identique du début à la fin de la mesure.

Un tel dispositif a été utilisé avec succès sur des nidas possédant des dimensions de maillage aussi différentes que 7 mm, 3 mm ou 1,57 mm.

Le dispositif peut être utilisé pour tout type de surfaces, planes, gauches, ou circulaires placées à l'intérieur ou à l'extérieur de carters cylindriques.

## Revendications

1. Procédé de contrôle de l'adhésion d'une structure nid d'abeille dite nida (1) sur un support (2), caractérisé en ce que on applique sur la surface externe des alvéoles du nida un boîtier capteur (3, 30, 300) comportant deux compartiments (3c, 3d, 30C, 30d, 310c, 310d) séparés par une cloison centrale (3b, 30b, 310b) un premier compartiment (3c, 30c, 310c) étant alimenté en air comprimé et l'autre (3d, 30d, 310d) comportant une tubulure d'échappement (5) reliée à un débit-mètre (6), on mesure le débit d'air passé du premier au second compartiment et évacué par la tubulure d'échappement (5), et on en déduit la présence ou non de zones (D) non adhérentes du nida sur le support.

2. Procédé de contrôle selon la revendication 1 adapté au contrôle d'une surface de zone égale à celle du boîtier capteur (3, 300), caractérisé en ce que l'on utilise un boîtier capteur (3, 300) comportant deux compartiments (3c, 3d, 310c, 310d),séparés par une cloison (3b, 310b) étanche obligeant l'air à passer au travers de zones (D) non adhérentes du nida sur le support pour passer du premier (3c, 310c) au second compartiment (3d, 310d) et en ce que la présence de défauts (D) d'adhésion du nida sur le support est révélée par l'existence d'un débit dans la tubulure d'échappement (5) tandis que l'application du boîtier sur une zone du nida normalement adhérente est traduite par un débit nul dans la tubulure d'échappement (5).

3. Procédé de contrôle selon la revendication 1 caractérisé en ce qu'on utilise un boîtier capteur (3, 300) dont la cloison étanche (3b, 310b) a une épaisseur égale à la taille maximale du défaut admissible diminuée de la largeur d'un demi-alvéole.

4. Procédé de contrôle selon la revendication 1 adapté au contrôle de défauts d'adhésion d'un nida (1) sur une structure (2) existants entre les alvéoles situées au droit des parois du boîtier capteur appliqué sur le nida, et la zone qui l'entoure caractérisé en ce qu'on applique sur la zone à contrôler un boîtier capteur (30) dont la cloison interne (30b) n'assure pas l'étanchéité entre le premier (30c) et le second compartiment (30d) et on déduit l'existence d'un défaut au droit de la paroi externe du boîtier capteur (30) de la constatation d'un débit nul ou inférieur au débit de la source d'air comprimé, dans la tubulure d'échappement (5) du boîtier capteur.

5. Dispositif de contrôle pour la mise en oeuvre du procédé selon l'une quelconque des revendications 1 à 4, caractérisé en ce qu'il comporte un boîtier capteur défini par un volume tel qu'un parallélépipède rectangle (3) ou un cylindre (30) comportant une face plane ouverte (3a, 30a) et possédant une cloison intermédiaire (3b, 30b) définissant deux compartiments (3c, 3d, 30c, 30d) débouchant chacun sur la face ouverte, ladite face ouverte étant apte à être plaquée contre la surface externe des alvéoles d'un nida (1) dont l'extrémité interne adhère à un support (2) et en ce qu'il comporte en combinaison avec ledit boîtier une source (4) d'air comprimé reliée par une tubulure à la paroi du premier compartiment (3c, 30c) pour alimenter celui-ci en air comprimé et au moins un débit-mètre (6) relié par une tubulure d'échappement (5) à la paroi du second compartiment (3d, 30d) du boîtier et apte à mesurer le débit d'air passant par ladite tubulure d'échappement lorsque le boîtier capteur (3, 30) est plaqué contre le nida dont l'adhésion sur le support doit être contrôlé.

6. Dispositif de contrôle selon la revendication 5, caractérisé en ce qu'il comporte une unité d'enregistrement (10) des débits mesurés.

7. Dispositif de contrôle selon l'une des revendications 5 ou 6 pour le contrôle de l'adhésion de bandes de nida sur des pièces circulaires caractérisé en ce qu'il comporte :
- un plateau tournant (7) apte à recevoir la pièce à contrôler et muni d'un dispositif (8) de mise en rotation séquentielle avec codage angulaire, ledit moyen de codage comportant une sortie vers une unité d'enregistrement (10) ;
- un boîtier capteur (3, 30) porté par un bras support (11) disposé radialement par rapport à la pièce et apte à être déplacé selon un mouvement linéaire alternatif pour plaquer le boîtier (3, 30) contre le nida (1) à contrôler lors de chaque séquence de rotation de la pièce ;
- une source (4) d'air comprimé reliée au boîtier capteur (3, 30);
- un débit-mètre (6) relié au boîtier capteur (3, 30) et son unité de traitement (10), celle-ci étant apte à mémoriser les débits mesurés et à les corréler avec l'indication du codage angulaire du plateau tournant (7).

8. Dispositif de contrôle selon la revendication 7 caractérisé en ce que la source (4) d'air comprimé reliée au boîtier capteur (3, 30) est commandée par une unité de commande (10) apte à ouvrir le débit d'air lorsque le boîtier capteur (3, 30) est plaqué par le bras (11) contre le nida (1) et à interrompre le débit lorsque le bras support (11) entame son mouvement de recul.

9. Dispositif de contrôle pour la mise en oeuvre du procédé selon l'une quelconque des revendications 1 à 3 caractérisé en ce qu'il comporte un boîtier capteur (300) comportant un distributeur (310) tournant autour d'un moyeu fixe (320), ledit moyeu comportant un premier conduit radial (321) d'admission d'air comprimé relié à une source d'air comprimé (4) et un second conduit radial (322) d'échappement d'air relié par une tubulure (5) et un débit-mètre (6) à une unité de contrôle (10), en ce que le distributeur comporte sur sa périphérie un joint circulaire collé définissant des compartiments séparés entre eux par des joints étanches (310b), et en combinaison au moins un canal radial (311) d'admission d'air et un canal radial (312) d'échappement reliés chacun à un compartiment (respectivement 310c, 310d), lesdits compartiments étant adjacents et séparés par un joint (310b) et en ce que lors de la rotation du distributeur sur le moyeu chaque compartiment devient successivement compartiment d'admission (310c) puis compartiment d'échappement (310d) lors du passage de son conduit radial associé (311 ou 312) dans le prolongement d'un canal d'admission (321) ou d'échappement (322) du moyeu.

## Patentansprüche

1. Verfahren zur Kontrolle der Haftung einer bienenwabenförmigen Struktur, genannt Nest (1), auf einem Träger (2),
dadurch gekennzeichnet, daß auf der Außenfläche der Waben des Nests ein Meßgehäuse (3, 30, 300) aufgesetzt wird, das aus zwei Abteilen (3c, 3d, 30c, 30d, 310c, 310d) besteht, die durch eine zentrale Trennwand (3b, 30b, 310b) voneinander getrennt sind, wobei ein erstes Abteil (3c, 30c, 310c) mit Druckluft versorgt wird und das zweite (3d, 30d, 310d) einen Auslaßrohrstutzen (5) aufweist, der mit einem Durchflußmesser (6) verbunden ist, daß der Durchfluß der vom ersten zum zweiten Abteil geströmten und durch den Auslaßrohrstutzen (5) abgegebenen Luft gemessen wird und daß daraus abgeleitet wird, ob Bereiche (D) des Nests, die nicht an dem Träger haften, vorhanden sind oder nicht.

2. Kontrollverfahren nach Anspruch 1, das zur Kontrolle einer Sektorfläche geeignet ist, die gleich groß ist wie die des Meßgehäuses (3, 300), dadurch gekennzeichnet, daß ein Meßgehäuse (3, 300) verwendet wird, das aus zwei Abteilen (3c, 3d, 310c, 310d) besteht, die durch eine dichte Trennwand (3b, 310b) voneinander getrennt sind, die die Luft dazu zwingt, durch Bereiche (D) des Nests, die nicht an dem Träger haften, zu strömen, um vom ersten (3c, 310c) zum zweiten Abteil (3d, 310d) zu gelangen, und daß das Vorhandensein von Haftmängeln (D) des Nests an dem Träger sich durch das Vorhandensein eines Durchflusses in dem Auslaßrohrstutzen (5) herausstellt, während sich bei der Anwendung des Gehäuses auf einem normal haftenden Sektor des Nestes ein Null-Durchfluß in dem Auslaßrohrstutzen (5) ergibt.

3. Kontrollverfahren nach Anspruch 1, dadurch gekennzeichnet, daß ein Meßgehäuse (3, 300) verwendet wird, dessen dichte Trennwand (3b, 310b) eine Dicke hat, die gleich groß ist wie die maximale Größe des zulässigen Mangels abzüglich der Breite einer halben Wabe.

4. Kontrollverfahren nach Anspruch 1, das zur Kontrolle von Haftmängeln eines Nests (1) an einer Struktur (2) geeignet ist, die zwischen den Waben, die sich im Bereich der Wände des auf das Nest aufgesetzten Meßgehäuses befinden, und dem Sektor, der es umgibt, vorhanden sind, dadurch gekennzeichnet, daß auf dem zu kontrollierenden Sektor ein Meßgehäuse (30) aufgesetzt wird, dessen Innenwand (30b) die Dichtigkeit zwischen dem ersten (30c) und dem zweiten Abteil (30d) nicht gewährleistet, und daß aus der Feststellung eines Null-Durchflusses oder eines Durchflusses, der geringer ist als der Durchfluß der Druckluftquelle, in dem Auslaßrohrstutzen (5) des Meßgehäuses (30) das Vorhandensein eines Mangels im Bereich der Außenwand des Meßgehäuses abgeleitet wird.

5. Kontrollvorrichtung zur Ausführung des Verfahrens nach einem der Ansprüche 1 bis 4, dadurch gekennzeichnet, daß sie aus einem Meßgehäuse besteht, das durch ein Volumen wie z. B. einem rechtwinkligen Parallelepiped (3) oder einem Zylinder (30) mit einer offenen, ebenen Seite (3a, 30a) und einer Zwischenwand (3b, 30b) definiert wird, die zwei Abteile (3c, 3d, 30c, 30d) abgrenzt, die beide in die offene Seite münden, wobei die genannte offene Seite auf die Außenseite der Waben eines Nests (1) aufgesetzt werden kann, dessen inneres Ende an einem Träger (2) haftet, und daß sie eine mit dem genannten Gehäuse kombinierte Druckluftquelle (4), die mit einem Stutzen an der Wand des ersten Abteils (3c, 30c) angeschlossen ist, um dieses mit Druckluft zu versorgen, und mindestens einen Durchflußmesser (6) aufweist, der durch einen Auslaßrohrstutzen (5) mit der Wand des zweiten Abteils (3d, 30d) des Gehäuses verbunden ist und geeignet ist, den Luftdurchfluß durch den genannten Auslaßrohrstutzen zu messen, wenn das Meßgehäuse (3, 30) an dem Nest, dessen Haftung am Träger kontrolliert werden soll, aufgesetzt ist.

6. Kontrollvorrichtung nach Anspruch 5, dadurch gekennzeichnet, daß sie eine Aufzeichnungseinheit (10) für die gemessenen Durchflußmengen aufweist.

7. Kontrollvorrichtung nach einem der Ansprüche 5 oder 6 zur Kontrolle der Haftung von Neststreifen auf kreisförmigen Teilen, dadurch gekennzeichnet, daß sie
- eine Drehscheibe (7), die geeignet ist, das zu kontrollierende Teil aufzunehmen, und mit einer Vorrichtung (8) versehen ist, um sie in Sequenzen mit Winkelkodierung in Drehung zu versetzen, wobei das genannte Kodiermittel einen Ausgang zu einer Aufzeichnungseinheit (10) aufweist;
- ein Meßgehäuse (3, 30), das von einem Tragarm (11) gehalten wird, der radial zu dem Teil angeordnet ist und in einer linearen Hin- und Herbewegung verschoben werden kann, um bei jeder Drehsequenz des Teils das Gehäuse (3, 30) an dem zu kontrollierenden Nest (1) aufzusetzen;
- eine Druckluftquelle (4), die mit dem Meßgehäuse (3, 30) verbunden ist;
- einen mit dem Meßgehäuse (3, 30) verbundenen Durchflußmesser (6) und seine Bearbeitungseinheit (10), wobei diese in der Lage ist, die gemessenen Durchflußmengen zu speichern und sie mit der Anzeige der Winkelkodierung der Drehscheibe (7) zu korrelieren, aufweist.

8. Kontrollvorrichtung nach Anspruch 7, dadurch gekennzeichnet, daß die Druckluftquelle (4), die mit dem Meßgehäuse (3, 30) verbunden ist, von einer Steuereinheit (10) gesteuert wird, die in der Lage ist, den Luftdurchfluß zu öffnen, wenn das Meßgehäuse (3, 30) mit dem Arm (11) an dem Nest (1) anliegt, und den Durchfluß zu unterbrechen, wenn der Tragarm (11) seine Rückbewegung beginnt.

9. Kontrollvorrichtung zur Ausführung des Verfahrens nach einem der Ansprüche 1 bis 3, dadurch gekennzeichnet, daß sie aus einem Meßgehäuse (300) besteht, das einen Verteiler (310) aufweist, der um einen feste Nabe (320) dreht, wobei die genannte Nabe eine erste radiale Leitung (321) zur Zuführung von Druckluft, die mit einer Druckluftquelle (4) verbunden ist, und eine zweite radiale Leitung (322) zum Ablassen von Druckluft, die über einen Rohrstutzen (5) und ein Durchflußmesser (6) mit einer Steuereinheit (10) verbunden ist, aufweist, daß beim Drehen des Verteilers auf der Nabe jedes Abteil nacheinander Zufuhrabteil (310c) und dann Ablaßabteil (310d) wird, wenn dessen angeschlossene radiale Leitung (311 bzw. 312) sich in Verlängerung eines Zufuhrkanals (321) oder eines Auslaßkanals (322) der Nabe befindet.

## Claims

1. A process for checking the adhesion of a honeycomb-type structure (1) to a support (2), characterised in that a sensor module (3, 30, 300) comprising two compartments (3c, 3d, 30c, 30d, 310c, 310d) separated by a central partition (3b, 30b, 310b), is applied to the outer surface of the cells of the honeycomb, a first compartment (3c, 30c, 310c) being supplied with compressed air and the other (3d, 30d, 310d) comprising an outlet pipe (5) connected to a flow meter (6), the flow of air passing from the first to the second compartment is measured and discharged through the outlet pipe (5), and the presence or otherwise of areas (D) of the honeycomb not adhering to the support is deduced therefrom.

2. A checking process according to Claim 1 suited to the checking of the surface of an area equal to that of the sensor module (3, 300), characterised in that use is made of a sensor module (3, 300) comprising two compartments (3c, 3d, 310c, 310d), separated by a sealed partition (3b, 310b) obliging the air to pass through areas (D) of the honeycomb not adhering to the support in order to pass from the first (3c, 310c) to the second (3d, 310d) compartment and in that the presence of defects (D) in the adhesion of the honeycomb to the support is revealed by the existence of a flow into the outlet pipe (5) while the application of the module to an area of the normally adhering honeycomb is conveyed by a zero flow into the outlet pipe (5).

3. A checking process according to Claim 1 characterised in that use is made of a sensor module (3, 300), the sealed partition of which (3b, 310b) has a thickness equal to the maximum size of the admissible defect, less the width of half a cell.

4. A checking process according to Claim 1, suited to the checking of defects in the adhesion of a honeycomb (1) to a structure (2), which exist between the cells located at right angles to the walls of the sensor module applied to the honeycomb, and the area surrounding it, characterised in that a sensor module (30), the inner partition (30b) of which does not provide a seal between the first (30c) and the second (30d) compartment, is applied to the area to be checked, and the existence of a defect at right angles to the outer wall of the sensor module (30) is deduced from the observation of a zero flow, or less than the flow of the source of compressed air, in the outlet pipe (5) of the sensor module.

5. A checking device for implementing the process according to any one of Claims 1 to 4, characterised in that it comprises a sensor module defined by a volume such as a rectangular parallelepiped (3) or a cylinder (30) comprising an open plane face (3a, 30a) and having an intermediate partition (3b, 30b) defining two compartments (3c, 3d, 30c, 30d) each opening on to the open face, said open face being suitable for being flattened against the outer surface of the cells of a honeycomb (1), the inner extremity of which adheres to a support (2) and in that, in combination with said module, it comprises a source (4) of compressed air connected by a pipe to the wall of the first compartment (3c, 30c) in order to supply the latter with compressed air and at least one flow meter (6) connected by an outlet pipe (5) to the wall of the second compartment (3d, 30d) of the module and suitable for measuring the flow of air passing through said outlet pipe when the sensor module (3, 30) is flattened against the honeycomb, the adhesion of which to the support has to be checked.

6. A checking device according to Claim 5, characterised in that it comprises a unit (10) for recording the flows measured.

7. A checking device according to one of Claims 5 or 6 for checking the adhesion of strips of honeycomb to circular parts, characterised in that it comprises:
- a turntable (7) suitable for supporting the part to be checked and fitted with a device (8) for initiating sequential rotation with angular coding, said coding means comprising an output to a recording unit (10);
- a sensor module (3, 30) carried by a sensor arm (11) disposed radially relative to the part and suitable for being displaced in an alternating linear movement in order to flatten the module (3, 30) against the honeycomb (1) to be checked at each sequence of rotation of the part;
- a source (4) of compressed air connected to the sensor module (3, 30);
- a flow meter (6) connected to the sensor module (3, 30) and its processing unit (10), the latter being suitable for storing the flows measured and correlating them with the indication of angular coding of the turntable (7).

8. A checking device according to Claim 7 characterised in that the source (4) of compressed air connected to the sensor module (3, 30) is controlled by a control unit (10) suitable for opening the air flow when the sensor module (3, 30) is flattened by the air (11) against the honeycomb (1) and for shutting off the flow when the support arm (11) starts its backward movement.

9. A checking device for implementing the process according to any one of Claims 1 to 3, characterised in that it comprises a sensor module (300) comprising a distributor (310) rotating around a fixed hub (320), said hub comprising a first radial conduit (321) as an inlet for compressed air, connected to a source of compressed air (4) and a second radial conduit (322) as an outlet for air, connected by a pipe (5) and a flow meter (6) to a control unit (10), in that the distributor comprises on its periphery a bonded circular seal defining compartments separated from each other by sealing joints (310b), and in combination with at least one radial air inlet channel (311) and a radial outlet channel (312) each connected to a compartment (respectively 310c, 310d), said compartments being adjacent and separated by a seal (310b) and in that, when the distributor is rotated on the hub, each compartment in succession becomes an inlet compartment (310c) then an outlet compartment (310d) as its associated radial conduit (311 or 312) passes into the extension of an inlet (321) or outlet (322) channel of the hub.
